# EUROPEAN PATENT SPECIFICATION

(11) **EP 4 471 607 B1**
(45) Date of publication and mention of the grant of the patent: **24.06.2026**
(21) Application number: 23762847.4
(22) Date of filing: 27.02.2023
(51) Int. Cl.: G06F 12/02, G06F 3/06

(54) **ADDRESS MANAGEMENT METHOD AND STORAGE APPARATUS**
ADRESSENVERWALTUNGSVERFAHREN UND SPEICHERVORRICHTUNG
PROCÉDÉ DE GESTION D'ADRESSE ET APPAREIL DE STOCKAGE

(30) Priority: 02.03.2022 CN 202210205409
(43) Date of publication of application: 04.12.2024
(73) Proprietor: Huawei Technologies Co., Ltd., Shenzhen, Guangdong 518129 (CN)
(72) Inventor: SUN, Yaping, Shenzhen, Guangdong 518129 (CN); RAN, Yi, Shenzhen, Guangdong 518129 (CN); ZHU, Sheng, Shenzhen, Guangdong 518129 (CN); XIE, Shoutao, Shenzhen, Guangdong 518129 (CN)
(74) Representative: Isarpatent
(86) International application number: PCT/CN2023/078523
(87) International publication number: WO 2023/165448

(56) References cited:
- CN-A- 107 066 498
- CN-A- 108 614 668
- CN-A- 110 058 804
- CN-A- 112 395 212
- US-A1- 2019 384 530
- US-A1- 2019 384 720
- US-A1- 2021 141 721
- US-A1- 2021 209 027
- US-B1- 10 769 064
- WU SUNG-MING ET AL: "Integrating LSM Trees With Multichip Flash Translation Layer for Write-Efficient KVSSDs", IEEE TRANSACTIONS ON COMPUTER-AIDED DESIGN OF INTEGRATED CIRCUITS AND SYSTEMS, IEEE, USA, vol. 40, no. 1, 14 April 2020 (2020-04-14), pages 87 - 100, XP011829090, ISSN: 0278-0070, [retrieved on 20210101], DOI: 10.1109/TCAD.2020.2987781

## Description

### TECHNICAL FIELD

This disclosure generally relates to the field of data storage technologies.

The invention, in particular, relates to an address management method and a storage apparatus.

### BACKGROUND

Currently, a solid-state disk (solid-state disk, SSD) is usually used to store a key-value (key-value, KV) pair. The SSD includes an enhanced flash translation layer (flash translation layer, FTL). When the SSD receives a read/write request of a controller for a key-value pair, the enhanced FTL is used to directly convert the read/write request of the controller for the key-value pair into a read/write request for a physical block address (physics block address, PBA), to improve a read/write speed of the key-value pair. The SSD may also be referred to as a KV SSD. However, when accessing the SSD, the controller uses a key in the key-value pair as an index instead of using a logical block address (logical block address, LBA) as an index. Consequently, it is difficult to implement address management in the SSD. In a conventional technology, address management is performed by using the following two solutions.

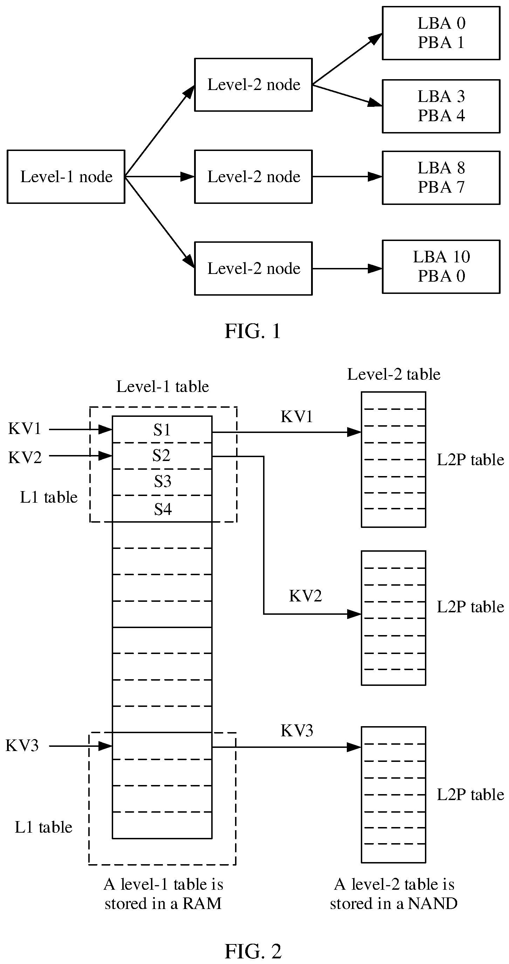

Solution 1: A binary tree mapping table is used for address management. When writing a key-value pair, the controller performs a hash operation to obtain a hash value of the key-value pair. The hash value is a 48-bit (bit) LBA. If a linear table is used to store the 48-bit LBA, large space needs to be occupied. Therefore, a binary tree is used for management. FIG. 1 is a diagram of binary tree management. The binary tree may include one level-1 node and a plurality of level-2 nodes. The level-1 node is used to store addresses of the plurality of level-2 nodes. Each level-2 node is used to store at least one LBA. Each LBA corresponds to one PBA. When reading a key-value pair, the controller performs a hash operation to obtain a hash value of the key-value pair and compares the hash value with a hash value stored in each level-2 node, and if the hash value is consistent with a hash value stored in a level-2 node, the controller reads a corresponding PBA in the node. However, in a mapping table managed by using a binary tree, a larger size of a key-value pair indicates that one key-value pair needs to correspond to more PBAs. Therefore, nodes of three or more levels are needed for implementation. As a result, a read/write delay is long. In addition, each node in the tree is accessed once in sequence during each time of reading/writing, reading or writing can be performed only once at a time, and reading or writing cannot be performed concurrently. In FIG. 1, three level-2 nodes are used as an example for description.

Manner 2: A multi-level mapping table is used for address management. FIG. 2 is a diagram of a multi-level mapping table. The mapping table includes a level-1 table and a level-2 table. The level-1 table is used to store an address of the level-2 table, and the level-2 table is used to store a PBA of a key-value pair. Specifically, the level-1 table includes a plurality of L1 tables, the level-2 table includes a plurality of L2P tables. Each of the plurality of L1 tables includes four slots (slot), which are denoted as S1 to S4. Each of the four slots is used to store an address of an L2P table. Each of the plurality of L2P tables is used to store a PBA of one key-value pair. The level-1 table is stored in a random access memory (random access memory, RAM) of the SSD, and the level-2 table is stored in a NAND flash memory of the SSD. In FIG. 2, an example in which the level-1 table includes four L1 tables is used for description. When writing a key-value pair, the controller calculates, based on a hash function, a slot that is in the level-1 table and that corresponds to the key-value pair, stores a PBA of the key-value pair in one L2P table corresponding to the slot, and stores an address of the L2P table in the slot. When reading a key-value pair, the controller calculates, based on a hash function, a slot that is in the level-1 table and that corresponds to the key-value pair, finds a corresponding L2P table based on address information that is of the L2P table and that is stored in the slot, and reads a PBA of the key-value pair from the L2P table. However, in this solution, one key-value pair corresponds to one L2P table, capacities of different L2P tables are the same, and a design is implemented based on a key-value pair with a largest size in a plurality of key-value pairs. Consequently, storage space of the SSD is wasted.

US 10,769,064 B1 discloses a method for accessing a key-value pair stored in a SSD memory, the method may include receiving, by a SSD memory controller, an input key; applying a first hash function on an input key to provide a first address; reading, using the first address, an indicator that indicates whether (a) the input key is associated with a group of key-value pairs or whether (b) the input key is associated only with the key-value pair; retrieving, from the SSD memory, the values of the group associated with the input key, and extracting the value of the key-value pair, when the indicator indicates that the input key is associated with the group; and retrieving, from the SSD memory, a value of a key-value pair, when the indicator indicates that the input key is associated with the key-value pair.

The paper by WU SUNG-MING ET AL: "Integrating LSM Trees With Multichip Flash Translation Layer for Write-Efficient KVSSDs", XP011829090, IEEE Transactions on Computer-aided Design of Integrated Circuits and Systems, Vol. 40, Nr. 1, January 2021 relates to the technical problem of cascading write amplifications in conventional LSM-over-SSD designs, which involve multiple software layers including the LSM tree, host file system, and flash translation layer (FTL). It is described in the paper that these layers introduce significant write amplifications that negatively affect the performance and lifespan of SSDs used in key-value (KV) stores. The solution proposed in the paper is an integration of LSM trees with the FTL to create KVSSDs. This integration allows for copy-free compaction of LSM trees and direct data allocation in flash memory for efficient garbage collection. The design also includes a fine-grained, dynamic striping policy to fully exploit the internal parallelism of multichip SSDs.

US 2019/384720 A1 discloses a memory system receiving a write request specifying a first logical address to which first data is to be written, and a length of the first data, from a host. The memory system writes the first data to a nonvolatile memory, and stores a first physical address indicating a physical storage location on the nonvolatile memory to which the first data is written, and the length of the first data, in an entry of a logical-to-physical address translation table corresponding to the first logical address. When the memory system receives a read request specifying the first logical address, the memory system acquires the first physical address and the length from the address translation table, and reads the first data from the nonvolatile memory.

US 2021/209027 A1 discloses a method for mapping an object store may include storing a data entry within a mapping page for an object in the object store, wherein the data entry may include a key and a value, and the value may include an address for the object in the object store. The method may further include storing multiple data entries within the mapping page for multiple corresponding objects in the object store, wherein each data entry may include a key and one or more values for a corresponding object in the object store, and each value may include an address for the corresponding object in the object store. The data entries may be part of a mapping data structure which may include nodes, and each node may be stored within a mapping page.

CN 108614668 A discloses a KV model-based data access method, and a solid state storage device. The method comprises the steps of receiving a first key (Key) value and first data (Value) from a host; performing hash operation on the first key value to obtain a first hash value; allocating a first physical address for the first hash value; and writing the first key value and the first data in a firstdata unit corresponding to the first physical address. The solid state storage device comprises an interface, a control part, one or more NVM chips and a DRAM, wherein the control part is used for controlling data transmission among the interface, the NVM chips and the DRAM; and the method is executed through an executive program. The method is applied to the data access operation of the solid state storage device.

CN 107066498 A also discloses a KV (Key Value) storage method and device, and relates to the field of data storage. The method comprises the following steps that: when a target KV is stored, storing a Value in the target KV into a variable-length page in an SCM (Storage Class Memory); updating a primary index and a mapping table, wherein the primary index comprises a mapping relationship between a Key and a logic address in the stored KV, and the mapping table comprises a mapping relationship between the logic address and the physical address of the stored KV; when a first combination condition is met, combining the Value in the variable-length page to a fixed-length page in the SCM; updating the mapping table; when a second combination condition is met, combining the Value in the fixed-length page to a block page in an SSD (Solid State Drive); and updating the mapping table again. By use of the method, the problem of low performance of KV storage in the prior art is solved, and an effect on improving KV storage performance can be achieved.

CN 112395212 A discloses a method and a system for reducing garbage collection and write amplification of a key-value separation storage system, and belongs to the field of computer storage, the systemcomprises a memory, an NVM and an SSD; and a first storage area and a second storage area in the NVM manage data according to an LSM-tree and a memory pool respectively; the method comprises the steps of judging whether the size of a to-be-inserted key value pair is greater than or equal to a first threshold value or not, if so, inserting the key value pair into the second storage area, and theninserting a key and a key value address into LSM-tree; otherwise, directly inserting the key value pair into LSM-tree; when the key value pair in the memory pool is deleted, marking the corresponding storage unit as an idle memory unit; when the data volume in the second storage area is higher than a second threshold value, brushing down the key value pair with the least frequent access to the SSD, and updating the storage address of the key value pair; and setting a flag bit segment on the NVM, and identifying the validity of the key value pair of the data segment on the SSD. Garbage collection and write amplification of the key value storage system can be reduced, and the overall performance of the key value separation storage system is improved.

US 2019/384530 A1 discloses systems, a method and a non-transitory computer readable media for accessing a key value pair stored in a solid state drive (SSD) memory, wherein the method includes calculating, by a SSD memory controller and based on an input key, a first bucket identifier and a first inter-bucket value; determining a block cluster that stores the key pair value, based on the first bucket identifier, the first inter-bucket value and first metadata of a first data structure; calculating, based on the input key, a second bucket identifier and a second inter-bucket value; determining key pair value retrieval information, based on the second bucket identifier, the second inter-bucket value and second metadata of a second data structure; wherein the second data structure is allocated to the block cluster; and retrieving at least the value of the key pair value based on the key pair value retrieval information.

US 2021/141721 A1 discloses a system receiving a request to write data and associated metadata. The system determines a key associated with the data, wherein the key corresponds to an entry in a data structure maintained by a first storage system. The system writes the metadata to a first non-volatile memory of a first set of storage drives of the first storage system by updating the entry with a logical block address for the data and a physical location in a second set of storage drives of a second storage system. The system writes the key and the data to a second non-volatile memory of the second set of storage drives based on the physical location, wherein the first non-volatile memory is of a lower density than the second non-volatile memory.

CN 110058804 A discloses a data storage system that includes: a plurality of data storage devices for storing a plurality of objects of a key-value pair; and a virtual storage layer that applies different data reliability schemes including a data replication scheme and an erasure coding scheme based on a size of an object of the plurality of objects. The plurality of objects includes a first object having a first size and a second object having a second size that is larger than the first size. The virtual storage layer classifies the first object as a small object, applies the data replication scheme, and stores the small object across one or more of the plurality of data storage devices. The virtual storage layer classifies the second object as a huge object, splits the huge object into one or more chunks of a same size, applies the erasure encoding scheme, and distributedly stores the one or more chunks across the plurality of data storage devices. A method for writing the objects of key-value pairs is also provided.

### SUMMARY

The object of the present invention is to provide an address management method and a storage apparatus, to improve utilization of storage space. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

To achieve the foregoing objective, the following technical solutions are used in this application.

According to a first aspect according to the invention, the invention provides the following address management method applied to a memory including at least one storage area. The address management method includes: receiving a first access request, where the first access request includes a first key-value pair; determining a first physical block address based on the first key-value pair; and determining a first address management level quantity based on a size of the first key-value pair, and storing the first physical block address in the at least one storage area based on the first address management level quantity.

In the foregoing technical solution, the first address management level quantity is determined based on the size of the first key-value pair, and the first physical block address is stored in the at least one storage area based on the first address management level quantity. In other words, in this application, address storage space corresponding to the size can be properly allocated based on the size of the first key-value pair to store the corresponding physical block address. However, in a conventional technology, for key-value pairs of different sizes, same address storage space is used to store corresponding physical block addresses, and a size of the address storage space is designed based on a key-value pair with a largest size. Therefore, in this application, when a size of a key-value pair is small, only small storage space needs to be allocated, so that a waste of storage space is avoided, and utilization of storage space is improved.

In a possible but not claimed implementation of the first aspect, the at least one storage area includes a first storage area, and the determining a first address management level quantity based on a size of the first key-value pair, and storing the first physical block address in the at least one storage area based on the first address management level quantity includes: if the size of the first key-value pair is less than or equal to a first threshold, determining that the first address management level quantity is one; and storing the first physical block address in a first bucket in the first storage area.

In the foregoing possible but not claimed implementation, when the size of the first key-value pair is less than the first threshold, it indicates that the size of the key-value pair is small, and further, a quantity of first physical block addresses corresponding to a value of the first key-value pair is small. The first physical block address may be directly stored in the first bucket, so that mapping of a second storage area and a third storage area is avoided, and utilization of storage space is improved.

In a possible but not claimed implementation of the first aspect, in the foregoing possible implementation, the at least one storage area includes a first storage area and a third storage area, and the determining a first address management level quantity based on a size of the first key-value pair, and storing the first physical block address in the at least one storage area based on the first address management level quantity includes: if the size of the first key-value pair is greater than a first threshold and less than a second threshold, determining that the first address management level quantity is two, where the first threshold is less than the second threshold; and storing the first physical block address in a first storage block of the third storage area, and storing an address of the first storage block in a first bucket of the first storage area.

In the foregoing possible but not claimed implementation, when the size of the first key-value pair is greater than the first threshold and less than the second threshold, the address management level quantity of the first key-value pair is two. This ensures normal storage of the first physical block address.

Still further according to the invention of the first aspect, according to the invention the at least one storage area includes a first storage area, a second storage area, and a third storage area, and the determining a first address management level quantity based on a size of the first key-value pair, and storing the first physical block address in the at least one storage area based on the first address management level quantity includes: if the size of the first key-value pair is greater than or equal to a second threshold, determining that the first address management level quantity is three; and storing the first physical block address in a first storage block of the third storage area, storing an address of the first storage block in a second storage block of the second storage area, and storing an address of the second storage block in a first bucket of the first storage area.

According to the invention, when the size of the first key-value pair is greater than or equal to the second threshold, it indicates that the size of the key-value pair is large, and further, a quantity of first physical block addresses corresponding to a value of the first key-value pair is large. The address management level quantity of the first key-value pair is three. This ensures normal storage of the first physical block address.

In a possible implementation of the first aspect, the method further includes: receiving a second access request, where the second access request includes a second key-value pair; determining a second physical block address based on the second key-value pair; and determining a second address management level quantity based on a size of the second key-value pair, and storing the second physical block address based on the second address management level quantity. If both the first address management level quantity and the second address management level quantity are greater than one, the second physical block address and the first physical block address share the first storage block.

In the foregoing possible implementation, the second physical block address and the first physical block address share the first storage block, that is, the first key-value pair and the second key-value pair share the first storage block, so that utilization of the first storage block is improved, and utilization of storage space is further improved.

In a possible implementation of the first aspect, if both the first address management level quantity and the second address management level quantity are three, the second storage block further stores an address of a third storage block of the third storage area, and the third storage block is used to store the second physical block address.

In the foregoing possible implementation, the second storage block further stores the address of the third storage block of the third storage area, that is, both the address of the third storage block of the third storage area and the address of the first storage block of the third storage area are stored in the second storage block. In other words, the first key-value pair and the second key-value pair share the second storage block, so that utilization of the second storage block is improved, and utilization of storage space is further improved.

In a possible implementation of the first aspect, the first storage area includes a plurality of buckets, and the method further includes:
performing a hash operation on the first key-value pair based on a hash function to obtain a first hash value, and determining the first bucket from the plurality of buckets based on the first hash value.

In the foregoing possible implementation, a bucket corresponding to a hash value may be directly determined from the plurality of buckets based on the hash value. The bucket is the first bucket, and the plurality of buckets do not need to be accessed one by one, so that a speed of determining the bucket is improved.

In a possible implementation of the first aspect, the plurality of buckets are divided into a plurality of bucket sets. Each bucket set in the plurality of bucket sets corresponds to one hash function, and different bucket sets correspond to different hash functions. In the foregoing possible implementation, different bucket sets correspond to different hash functions, so that hash conflicts between different bucket sets are reduced.

In a possible implementation of the first aspect, the first bucket includes at least one storage slot, and each of the at least one storage slot corresponds to one key-value pair.

In the foregoing possible implementation, each storage slot corresponds to one key-value pair. When the key-value pair in the storage slot is read, a read rate of the key-value pair is improved.

In a possible but not claimed implementation of the first aspect, a storage slot corresponding to each key-value pair further stores an identifier of the key-value pair.

In the foregoing possible not claimed implementation, when the first key-value pair is read, a storage slot corresponding to the first key-value pair may be directly determined by comparing an identifier stored in the storage slot with an identifier of the first key-value pair. This improves efficiency of reading the physical block address of the first key-value pair, and further improves efficiency of reading the first key-value pair.

In a possible but not claimed implementation of the first aspect, the memory includes a random access memory RAM, and the RAM includes the at least one storage area.

In the foregoing possible not claimed implementation, the RAM includes the at least one storage area. Both the first physical block address of the first key-value pair and an address related to the physical block address are stored in the RAM. Compared with storing the first physical block address in a NAND, this improves a speed of reading the physical block address of the key-value pair, and further improves a speed of reading the key-value pair.

In a possible but not claimed implementation of the first aspect, the memory includes a solid-state disk. In the foregoing possible implementation, the solid-state disk may be configured to directly convert a key-value pair read/write request into a physical block address read/write request, and does not need to perform other address conversion, so that key-value pair read/write efficiency is improved.

According to a second aspect according to the invention, the invention also comprises a storage apparatus. The storage apparatus includes at least one storage area. The storage apparatus further includes: a receiving unit, configured to receive a first access request, where the first access request includes a first key-value pair; and a determining unit, configured to determine a first physical block address based on the first key-value pair. The determining unit is further configured to determine a first address management level quantity based on a size of the first key-value pair, and store the first physical block address in the at least one storage area based on the first address management level quantity.

In a possible but not claimed implementation of the second aspect, the at least one storage area includes a first storage area. The determining unit is further configured to: if the size of the first key-value pair is less than or equal to a first threshold, determine that the first address management level quantity is one; and store the first physical block address in a first bucket in the first storage area.

In a possible but not claimed implementation of the second aspect, the at least one storage area includes a first storage area and a third storage area. The determining unit is further configured to: if the size of the first key-value pair is greater than a first threshold and less than a second threshold, determine that the first address management level quantity is two, where the first threshold is less than the second threshold; and store the first physical block address in a first storage block of the third storage area, and store an address of the first storage block in a first bucket of the first storage area.

According to the invention of the second aspect, the at least one storage area includes according to the invention a first storage area, a second storage area, and a third storage area. The determining unit is further configured to: if the size of the first key-value pair is greater than or equal to a second threshold, determine that the first address management level quantity is three; and store the first physical block address in a first storage block of the third storage area, store an address of the first storage block in a second storage block of the second storage area, and store an address of the second storage block in a first bucket of the first storage area.

In a possible implementation of the second aspect, the determining unit is further configured to determine a second physical block address based on a second key-value pair. The determining unit is further configured to determine a second address management level quantity based on a size of the second key-value pair, and store the second physical block address based on the second address management level quantity. If both the first address management level quantity and the second address management level quantity are greater than one, the second physical block address and the first physical block address share the first storage block.

In a possible implementation of the second aspect, if both the first address management level quantity and the second address management level quantity are three, the second storage block further stores an address of a third storage block of the third storage area, and the third storage block is used to store the second physical block address.

In a possible implementation of the second aspect, the first storage area includes a plurality of buckets. The determining unit is further configured to: perform a hash operation on the first key-value pair based on a hash function to obtain a first hash value; and determine the first bucket from the plurality of buckets based on the first hash value.

In a possible but not claimed implementation of the second aspect, the plurality of buckets are divided into a plurality of bucket sets. Each bucket set in the plurality of bucket sets corresponds to one hash function, and different bucket sets correspond to different hash functions.

In a possible but not claimed implementation of the second aspect, the first bucket includes at least one storage slot, and each of the at least one storage slot corresponds to one key-value pair.

In a possible but not claimed implementation of the second aspect, a storage slot corresponding to each key-value pair further stores an identifier of the key-value pair.

In a possible but not claimed implementation of the second aspect, the storage apparatus includes a random access memory RAM, and the RAM includes the at least one storage area.

In a possible but not claimed implementation of the second aspect, the storage apparatus includes a solid-state disk.

According to a third but not claimed aspect, a storage apparatus is provided. The storage apparatus includes a controller and at least one storage area. The controller is configured to perform the address management method provided in any one of the first aspect or the possible implementations of the first aspect.

According to still another but not claimed aspect of this application, a computer-readable storage medium is provided. The computer-readable storage medium includes computer instructions. When the computer instructions are run on a storage apparatus, related steps in the foregoing method embodiment are performed.

According to still another but not claimed aspect of this application, a computer program product including instructions is provided. When the computer program product is run on a device on a computer, a storage apparatus is enabled to perform related steps in the foregoing method embodiment.

It can be understood that the storage apparatus provided in the foregoing descriptions is configured to perform a corresponding method provided in the foregoing descriptions. Therefore, for beneficial effect that can be achieved by the apparatus, refer to beneficial effect in the corresponding method provided in the foregoing descriptions. Details are not described herein again.

In the following description, features which in the above summary of the invention have been marked as "not claimed" or "according to the invention" are also hereinafter, when they are described and explained with reference to the drawings, to be understood as "not claimed" or "not part of the invention" or "according to the invention". Even if sometimes in the description of the embodiments below, features marked above "according to the invention" or "the invention" are referred to in connection with the words "can" or "may" or other expressions which contain the notion of them being "optional", it should be understood that indeed such features are considered essential to the invention as claimed and not optional.

### BRIEF DESCRIPTION OF DRAWINGS

FIG. 1 is a diagram of binary tree management;
FIG. 2 is a diagram of a multi-level mapping table;
FIG. 3 is a diagram of a linear mapping table;
FIG. 4 is a diagram of a structure of a storage apparatus according to an embodiment of this application;
FIG. 5 is a flowchart of an address management method according to an embodiment of this application;

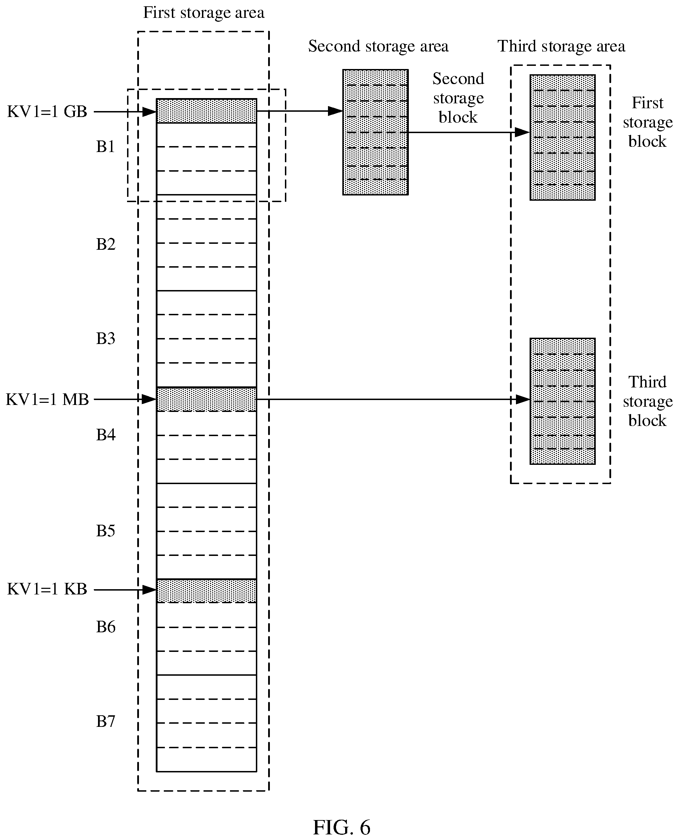

FIG. 6 is a diagram of address management according to an embodiment of this application;

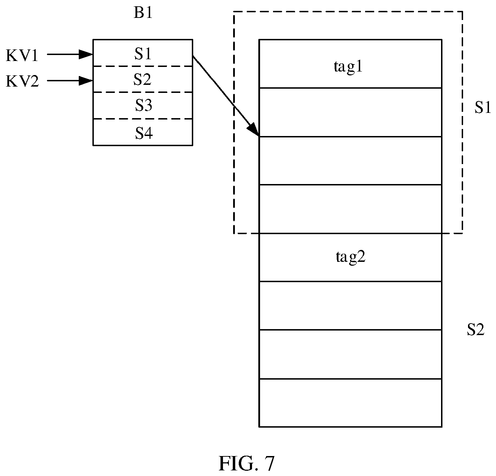

FIG. 7 is a diagram of a structure of a bucket according to an embodiment of this application;
FIG. 8 is another diagram of address management according to an embodiment of this application; and
FIG. 9 is a diagram of a structure of a storage apparatus according to an embodiment of this application.
address management level quantity is determined based on a size of a first key-value pair, and a first physical block address is stored in at least one storage area based on the first address management level quantity. In other words, in this application, address storage space corresponding to the size can be properly allocated based on the size of the first key-value pair to store a corresponding physical block address. However, in a conventional technology, for key-value pairs of different sizes, same address storage space is used to store a corresponding physical block address, and a size of the address storage space is designed based on a key-value pair with a largest size. Therefore, in this application, when the size of the key-value pair is small, only small storage space needs to be allocated, so that a waste of storage space is avoided, and utilization of storage space is improved.

In embodiments of this application, the storage apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example and is merely a logical function division. In actual implementation, another division manner may be used.

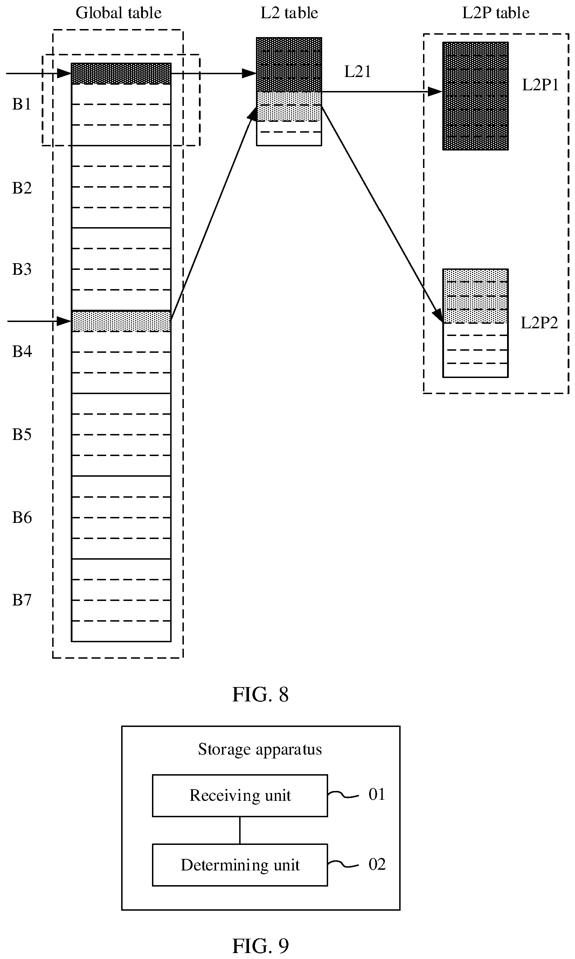

When each functional module is obtained through division based on each corresponding function, FIG. 9 is a diagram of a possible structure of a storage apparatus in the foregoing embodiment. The storage apparatus includes: A receiving unit 01 and a determining unit 02. The receiving unit 01 is configured to support the storage apparatus in performing S501 in the foregoing method embodiment, and the determining unit 02 is configured to support the storage apparatus in performing one or more steps of S502 and S503 in the foregoing method embodiment. The determining unit 02 is further configured to: perform a hash operation on a first key-value pair based on a hash function to obtain a first hash value; and determine a first bucket from a plurality of buckets based on the first hash value.

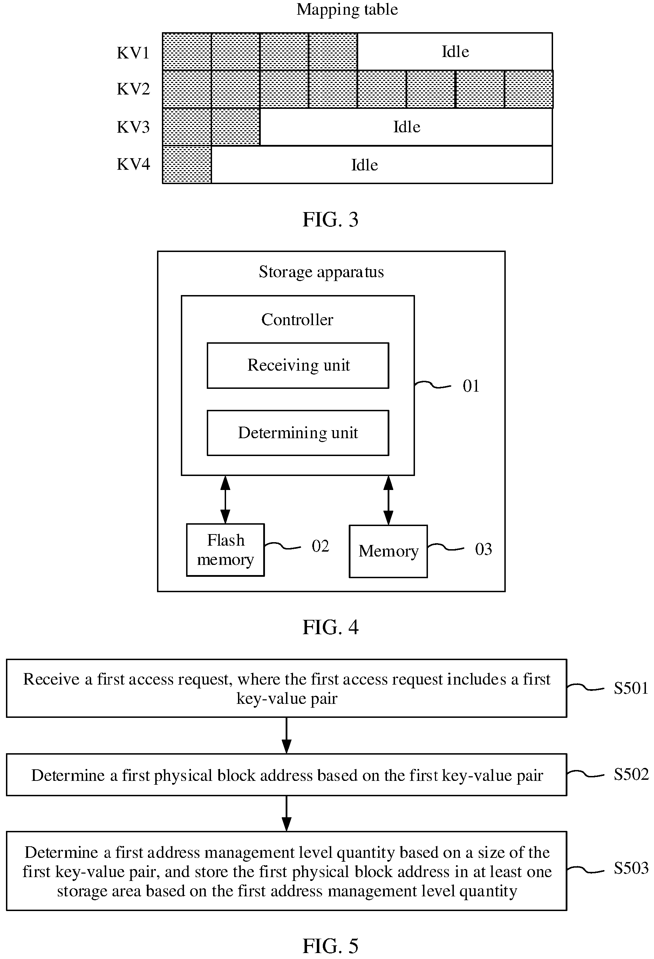

In hardware implementation, the receiving unit 01 and the determining unit 02 may be a controller of the storage apparatus shown in FIG. 4. For specific descriptions of the controller, refer to the specific descriptions in FIG. 4. Details are not described herein again in this embodiment of this application.

It should be noted that all related content of the steps in the foregoing method embodiments may be cited in function description of corresponding functional modules. Details are not described herein again. The apparatus provided in this embodiment of this application is configured to perform a corresponding function in the foregoing embodiment, and therefore can achieve same effect as the foregoing control method.

In the several embodiments provided in this application, it should be understood that the disclosed apparatus and method may be implemented in other manners. For example, the described apparatus embodiment is merely an example. For example, division into the modules or the units is merely logical function division and may be other division in actual implementation. For example, a plurality of units or components may be combined or integrated into another apparatus, or some features may be ignored or not performed. In addition, the displayed or discussed mutual couplings, direct couplings, or communication connections may be implemented through some interfaces. The indirect couplings or communication connections between the apparatuses or units may be implemented in an electronic form, a mechanical form, or other forms.

In addition, function units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in a form of a software product. The software product is stored in a storage medium and includes several instructions for instructing an apparatus to perform all or some of the steps of the method described in embodiments of this application. The foregoing storage medium includes any medium that can store program code, such as a USB flash drive, a removable hard disk, a ROM, a RAM, a magnetic disk, or an optical disc.

According to another aspect of this application, a storage apparatus is provided. The storage apparatus includes a controller and at least one storage area. The controller is configured to perform related steps in the foregoing method embodiments. The controller may be the controller provided in FIG. 4.

According to still another aspect of this application, a computer-readable storage medium is provided. The computer-readable storage medium includes computer instructions. When the computer instructions are run on a storage apparatus, related steps in the foregoing method embodiment are performed.

According to still another aspect of this application, a computer program product including instructions is provided. When the computer program product is run on a device on a computer, a storage apparatus is enabled to perform related steps in the foregoing method embodiment.

## Claims

1. An address management method, applied to a memory (02, 03) comprising at least one storage area, wherein the method comprises:
receiving (S501) a first access request, wherein the first access request comprises a first key-value pair;
determining (S502) a first physical block address based on the first key-value pair; and
determining (S503) a first address management level quantity based on a size of the first key-value pair, and storing the first physical block address in the at least one storage area based on the first address management level quantity; and
wherein the at least one storage area comprises a first storage area, a second storage area, and a third storage area, and the step of determining (S503) a first address management level quantity based on a size of the first key-value pair, and storing the first physical block address in the at least one storage area based on the first address management level quantity comprises:
if the size of the first key-value pair is greater than or equal to a threshold, performing the following: (a) determining that the first address management level quantity is three; and (b)
storing the first physical block address in a first storage block of the third storage area, storing an address of the first storage block in a second storage block of the second storage area, and storing an address of the second storage block in the first bucket of the first storage area.

2. The address management method according to claim 1, wherein the method further comprises:
receiving a second access request, wherein the second access request comprises a second key-value pair;
determining a second physical block address based on the second key-value pair; and
determining a second address management level quantity based on a size of the second key-value pair, and storing the second physical block address based on the second address management level quantity, wherein
if both the first address management level quantity and the second address management level quantity are greater than one, the second physical block address and the first physical block address share the first storage block.

3. The address management method according to claim 2, wherein if both the first address management level quantity and the second address management level quantity are three, the second storage block further stores an address of a third storage block of the third storage area, and the third storage block is used to store the second physical block address.

4. The address management method according to any one of claims 1 to 3, wherein the first storage area comprises a plurality of buckets, and the method further comprises:
performing a hash operation on the first key-value pair based on a hash function to obtain a first hash value, and determining the first bucket from the plurality of buckets based on the first hash value.

5. The address management method according to claim 4, wherein the plurality of buckets are divided into a plurality of bucket sets, each bucket set in the plurality of bucket sets corresponds to one hash function, and different bucket sets correspond to different hash functions.

6. The address management method according to any one of claims 1 to 5, wherein the first bucket comprises at least one storage slot, and each of the at least one storage slot corresponds to one key-value pair.

7. A storage apparatus, comprising at least one storage area, wherein the storage apparatus further comprises:
a receiving unit (01), configured to receive (S501) a first access request, wherein the first access request comprises a first key-value pair; and
a determining unit (02), configured to determine (S502) a first physical block address based on the first key-value pair, wherein
the determining unit (02) is further configured to: determine a first address management level quantity based on a size of the first key-value pair, and store the first physical block address in the at least one storage area based on the first address management level quantity; and
wherein the at least one storage area comprises a first storage area, a second storage area, and a third storage area, and the determining unit (02) is further configured to:
if the size of the first key-value pair is greater than or equal to a threshold, (a) determine that the first address management level quantity is three; and (b)
store the first physical block address in a first storage block of the third storage area, store an address of the first storage block in a second storage block of the second storage area, and store an address of the second storage block in a first bucket of the first storage area.

8. The storage apparatus according to claim 7, wherein
the receiving unit is further configured to receive a second access request, wherein the second access request comprises a second key-value pair;
the determining unit is further configured to determine a second physical block address based on the second key-value pair; and
the determining unit is further configured to: determine a second address management level quantity based on a size of the second key-value pair, and store the second physical block address based on the second address management level quantity, wherein
if both the first address management level quantity and the second address management level quantity are greater than one, the second physical block address and the first physical block address share the first storage block.

9. The storage apparatus according to claim 8, wherein if both the first address management level quantity and the second address management level quantity are three, the second storage block further stores an address of a third storage block of the third storage area, and the third storage block is used to store the second physical block address.

## Patentansprüche

1. Adressverwaltungsverfahren, das auf einen Speicher (02, 03) angewendet wird, der mindestens einen Speicherbereich umfasst, wobei das Verfahren Folgendes umfasst:
Empfangen (S501) einer ersten Zugriffsanforderung, wobei die erste Zugriffsanforderung ein erstes Schlüssel-Wert-Paar umfasst;
Bestimmen (S502) einer ersten physischen Blockadresse basierend auf dem ersten Schlüssel-Wert-Paar; und
Bestimmen (S503) einer ersten Adressverwaltungsebenenmenge basierend auf einer Größe des ersten Schlüssel-Wert-Paares und Speichern der ersten physischen Blockadresse in dem mindestens einen Speicherbereich basierend auf der ersten Adressverwaltungsebenenmenge; und
wobei der mindestens eine Speicherbereich einen ersten Speicherbereich, einen zweiten Speicherbereich und einen dritten Speicherbereich umfasst und der Schritt des Bestimmens (S503) einer ersten Adressverwaltungsebenenmenge basierend auf einer Größe des ersten Schlüssel-Wert-Paares und des Speicherns der ersten physischen Blockadresse in dem mindestens einen Speicherbereich basierend auf der ersten Adressverwaltungsebenenmenge Folgendes umfasst:
wenn die Größe des ersten Schlüssel-Wert-Paares größer als oder gleich einem Schwellenwert ist, Durchführen des Folgenden:
(a) Bestimmen, dass die erste Adressverwaltungsebenenmenge drei beträgt; und
(b) Speichern der ersten physischen Blockadresse in einem ersten Speicherblock des dritten Speicherbereichs, Speichern einer Adresse des ersten Speicherblocks in einem zweiten Speicherblock des zweiten Speicherbereichs und Speichern einer Adresse des zweiten Speicherblocks in dem ersten Bucket des ersten Speicherbereichs.

2. Adressverwaltungsverfahren nach Anspruch 1, wobei das Verfahren ferner Folgendes umfasst:
Empfangen einer zweiten Zugriffsanforderung, wobei die zweite Zugriffsanforderung ein zweites Schlüssel-Wert-Paar umfasst;
Bestimmen einer zweiten physischen Blockadresse basierend auf dem zweiten Schlüssel-Wert-Paar; und
Bestimmen einer zweiten Adressverwaltungsebenenmenge basierend auf einer Größe des zweiten Schlüssel-Wert-Paares und Speichern der zweiten physischen Blockadresse basierend auf der zweiten Adressverwaltungsebenenmenge, wobei
wenn sowohl die erste Adressverwaltungsebenenmenge als auch die zweite Adressverwaltungsebenenmenge größer als eins sind, die zweite physische Blockadresse und die erste physische Blockadresse den ersten Speicherblock gemeinsam nutzen.

3. Adressverwaltungsverfahren nach Anspruch 2, wobei, wenn sowohl die erste Adressverwaltungsebenenmenge als auch die zweite Adressverwaltungsebenenmenge drei betragen, der zweite Speicherblock ferner eine Adresse eines dritten Speicherblocks des dritten Speicherbereichs speichert und der dritte Speicherblock verwendet wird, um die zweite physische Blockadresse zu speichern.

4. Adressverwaltungsverfahren nach einem der Ansprüche 1 bis 3, wobei der erste Speicherbereich eine Vielzahl von Buckets umfasst und das Verfahren ferner Folgendes umfasst:
Durchführen eines Hashvorgangs an dem ersten Schlüssel-Wert-Paar basierend auf einer Hashfunktion, um einen ersten Hashwert zu erlangen, und Bestimmen des ersten Buckets aus der Vielzahl der Buckets basierend auf dem ersten Hashwert.

5. Adressverwaltungsverfahren nach Anspruch 4, wobei die Vielzahl von Buckets in eine Vielzahl von Bucketteilmengen unterteilt ist, jede Bucketteilmenge innerhalb der Vielzahl von Bucketteilmengen einer Hashfunktion entspricht und verschiedene Bucketteilmengen verschiedenen Hashfunktionen entsprechen.

6. Adressverwaltungsverfahren nach einem der Ansprüche 1 bis 5, wobei der erste Bucket mindestens einen Speicherplatz umfasst und jeder des mindestens einen Speicherplatzes einem Schlüssel-Wert-Paar entspricht.

7. Speichervorrichtung, umfassend mindestens einen Speicherbereich, wobei die Speichervorrichtung ferner Folgendes umfasst:
eine Empfangseinheit (01), die dazu konfiguriert ist, eine erste Zugriffsanforderung zu empfangen (S501), wobei die erste Zugriffsanforderung ein erstes Schlüssel-Wert-Paar umfasst; und
eine Bestimmungseinheit (02), die dazu konfiguriert ist, eine erste physische Blockadresse basierend auf dem ersten Schlüssel-Wert-Paar zu bestimmen (S502), wobei
die Bestimmungseinheit (02) ferner zu Folgendem konfiguriert ist: Bestimmen einer ersten Adressverwaltungsebenenmenge basierend auf einer Größe des ersten Schlüssel-Wert-Paares und Speichern der ersten physischen Blockadresse in dem mindestens einen Speicherbereich basierend auf der ersten Adressverwaltungsebenenmenge; und
wobei der mindestens eine Speicherbereich einen ersten Speicherbereich, einen zweiten Speicherbereich und einen dritten Speicherbereich umfasst und die Bestimmungseinheit (02) ferner zu Folgendem konfiguriert ist:
wenn die Größe des ersten Schlüssel-Wert-Paares größer als oder gleich einem Schwellenwert ist:
(a) Bestimmen, dass die erste Adressverwaltungsebenenmenge drei beträgt; und
(b) Speichern der ersten physischen Blockadresse in einem ersten Speicherblock des dritten Speicherbereichs, Speichern einer Adresse des ersten Speicherblocks in einem zweiten Speicherblock des zweiten Speicherbereichs und Speichern einer Adresse des zweiten Speicherblocks in einem ersten Bucket des ersten Speicherbereichs.

8. Speichervorrichtung nach Anspruch 7, wobei
die Empfangseinheit ferner dazu konfiguriert ist, eine zweite Zugriffsanforderung zu empfangen, wobei die zweite Zugriffsanforderung ein zweites Schlüssel-Wert-Paar umfasst; die Empfangseinheit ferner dazu konfiguriert ist, eine zweite physische Blockadresse basierend auf dem zweiten Schlüssel-Wert-Paar zu bestimmen; und
die Empfangseinheit ferner zu Folgendem konfiguriert ist:
Bestimmen einer zweiten Adressverwaltungsebenenmenge basierend auf einer Größe des zweiten Schlüssel-Wert-Paares und Speichern der zweiten physischen Blockadresse basierend auf der zweiten Adressverwaltungsebenenmenge, wobei
wenn sowohl die erste Adressverwaltungsebenenmenge als auch die zweite Adressverwaltungsebenenmenge größer als eins sind, die zweite physische Blockadresse und die erste physische Blockadresse den ersten Speicherblock gemeinsam nutzen.

9. Speichervorrichtung nach Anspruch 8, wobei, wenn sowohl die erste Adressverwaltungsebenenmenge als auch die zweite Adressverwaltungsebenenmenge drei betragen, der zweite Speicherblock ferner eine Adresse eines dritten Speicherblocks des dritten Speicherbereichs speichert und der dritte Speicherblock verwendet wird, um die zweite physische Blockadresse zu speichern.

## Revendications

1. Procédé de gestion d'adresse, appliqué à une mémoire (02, 03) comprenant au moins une zone de stockage, dans lequel le procédé comprend :
la réception (S501) d'une première demande d'accès, dans lequel la première demande d'accès comprend une première paire clé-valeur ;
la détermination (S502) d'une première adresse de bloc physique sur la base de la première paire clé-valeur ; et
la détermination (S503) d'une première quantité de niveau de gestion d'adresse sur la base d'une taille de la première paire clé-valeur, et le stockage de la première adresse de bloc physique dans l'au moins une zone de stockage sur la base de la première quantité de niveau de gestion d'adresse ; et
dans lequel l'au moins une zone de stockage comprend une première zone de stockage, une deuxième zone de stockage, et une troisième zone de stockage, et l'étape de détermination (S503) d'une première quantité de niveau de gestion d'adresse sur la base d'une taille de la première paire clé-valeur, et le stockage de la première adresse de bloc physique dans l'au moins une zone de stockage sur la base de la première quantité de niveau de gestion d'adresse comprend :
si la taille de la première paire clé-valeur est supérieure ou égale à un seuil, la réalisation des opérations suivantes : (a) la détermination que la quantité de premier niveau de gestion d'adresse est de trois ; et (b)
le stockage de l'adresse de premier bloc physique dans un premier bloc de stockage de la troisième zone de stockage, le stockage d'une adresse du premier bloc de stockage dans un deuxième bloc de stockage de la deuxième zone de stockage, et le stockage d'une adresse du deuxième bloc de stockage dans le premier compartiment de la première zone de stockage.

2. Procédé de gestion d'adresse selon la revendication 1, dans lequel le procédé comprend en outre :
la réception d'une seconde demande d'accès, dans lequel la seconde demande d'accès comprend une seconde paire clé-valeur ;
la détermination d'une seconde adresse de bloc physique sur la base de la seconde paire clé-valeur ; et
la détermination d'une seconde quantité de niveau de gestion d'adresse sur la base d'une taille de la seconde paire clé-valeur, et le stockage de la seconde adresse de bloc physique sur la base de la seconde quantité de niveau de gestion d'adresse, dans lequel
si la première quantité de niveau de gestion d'adresse et la seconde quantité de niveau de gestion d'adresse sont toutes deux supérieures à un, la seconde adresse de bloc physique et la première adresse de bloc physique partagent le premier bloc de stockage.

3. Procédé de gestion d'adresse selon la revendication 2, dans lequel si la première quantité de niveau de gestion d'adresse et la seconde quantité de niveau de gestion d'adresse sont toutes deux de trois, le deuxième bloc de stockage stocke en outre une adresse d'un troisième bloc de stockage de la troisième zone de stockage, et le troisième bloc de stockage est utilisé pour stocker l'adresse de second bloc physique.

4. Procédé de gestion d'adresse selon l'une quelconque des revendications 1 à 3, dans lequel la première zone de stockage comprend une pluralité de compartiments, et le procédé comprend en outre :
la réalisation d'une opération de hachage sur la première paire clé-valeur sur la base d'une fonction de hachage pour obtenir une première valeur de hachage, et la détermination du premier compartiment parmi la pluralité de compartiments sur la base de la première valeur de hachage.

5. Procédé de gestion d'adresse selon la revendication 4, dans lequel la pluralité de compartiments est divisée en une pluralité d'ensembles de compartiments, chaque ensemble de compartiments dans la pluralité d'ensembles de compartiments correspond à une fonction de hachage, et différents ensembles de compartiments correspondent à différentes fonctions de hachage.

6. Procédé de gestion d'adresse selon l'une quelconque des revendications 1 à 5, dans lequel le premier compartiment comprend au moins un emplacement de stockage, et chacun des au moins un emplacement de stockage correspond à une paire clé-valeur.

7. Appareil de stockage, comprenant au moins une zone de stockage, dans lequel l'appareil de stockage comprend en outre :
une unité de réception (01), configurée pour recevoir (S501) une première demande d'accès, dans lequel la première demande d'accès comprend une première paire clé-valeur ; et
une unité de détermination (02), configurée pour déterminer (S502) une première adresse de bloc physique sur la base de la première paire clé-valeur, dans lequel
l'unité de détermination (02) est en outre configurée pour :
déterminer une première quantité de niveau de gestion d'adresse sur la base d'une taille de la première paire clé-valeur, et stocker la première adresse de bloc physique dans l'au moins une zone de stockage sur la base de la première quantité de niveau de gestion d'adresse ; et
dans lequel l'au moins une zone de stockage comprend une première zone de stockage, une deuxième zone de stockage, et une troisième zone de stockage, et l'unité de détermination (02) est en outre configurée pour :
si la taille de la première paire clé-valeur est supérieure ou égale à un seuil, (a) déterminer que la quantité de premier niveau de gestion d'adresse est de trois ; et (b)
stocker l'adresse de premier bloc physique dans un premier bloc de stockage de la troisième zone de stockage, stocker une adresse du premier bloc de stockage dans un deuxième bloc de stockage de la deuxième zone de stockage, et stocker une adresse du deuxième bloc de stockage dans un premier compartiment de la première zone de stockage.

8. Appareil de stockage selon la revendication 7, dans lequel l'unité de réception est en outre configurée pour recevoir une seconde demande d'accès, dans lequel la seconde demande d'accès comprend une seconde paire clé-valeur ;
l'unité de détermination est en outre configurée pour déterminer une seconde adresse de bloc physique sur la base de la seconde paire clé-valeur ; et
l'unité de détermination est en outre configurée pour :
déterminer une seconde quantité de niveau de gestion d'adresse sur la base d'une taille de la seconde paire clé-valeur, et stocker la seconde adresse de bloc physique sur la base de la seconde quantité de niveau de gestion d'adresse, dans lequel
si la première quantité de niveau de gestion d'adresse et la seconde quantité de niveau de gestion d'adresse sont toutes deux supérieures à un, la seconde adresse de bloc physique et la première adresse de bloc physique partagent le premier bloc de stockage.

9. Appareil de stockage selon la revendication 8, dans lequel si la première quantité de niveau de gestion d'adresse et la seconde quantité de niveau de gestion d'adresse sont toutes deux de trois, le deuxième bloc de stockage stocke en outre une adresse d'un troisième bloc de stockage de la troisième zone de stockage, et le troisième bloc de stockage est utilisé pour stocker l'adresse de second bloc physique.
